**Europäisches Patentamt**

**European Patent Office**

**Office européen des brevets**

(19)

(11) Numéro de publication : **0 445 238 B1**

(12)

# FASCICULE DE BREVET EUROPEEN

(45) Date de publication du fascicule du brevet :
**24.08.94 Bulletin 94/34**

(51) Int. Cl.⁵ : **G02F 1/17,** B32B 31/24, C08J 7/00, H05B 3/00, H01M 10/50

(21) Numéro de dépôt : **90908237.2**

(22) Date de dépôt : **10.05.90**

(86) Numéro de dépôt international :
**PCT/FR90/00327**

(87) Numéro de publication internationale :
**WO 90/13844 15.11.90 Gazette 90/26**

(54) **PROCEDE DE CHAUFFAGE RAPIDE ET UNIFORME D'UN SYSTEME OPTIQUE MULTICOUCHE TRANSPARENT OU/ET REFLECHISSANT A ELECTROLYTE SOLIDE POLYMERE.**

(30) Priorité : **10.05.89 FR 8906110**

(43) Date de publication de la demande :
**11.09.91 Bulletin 91/37**

(45) Mention de la délivrance du brevet :
**24.08.94 Bulletin 94/34**

(84) Etats contractants désignés :
**AT BE CH DE DK ES FR GB IT LI LU NL SE**

(56) Documents cités :
**EP-A- 0 108 179**
**FR-A- 2 531 300**
**GB-A- 2 065 027**
**GB-A- 2 164 466**
**US-A- 4 505 790**
**JOURNAL OF APPLIED PHYSICS, vol. 57, No. 1, January 1985, American Institute of Physics, (Woodbury, New York, US) ; M. WATANABE et al. : "Ionic conductivity and mobility in network polymers from poly(propylene oxide) containing lithium perchlorate", pp. 123-128**

(73) Titulaire : **SOCIETE NATIONALE ELF AQUITAINE**
**Tour Elf,**
**2, Place de la Coupole,**
**La Défense 6**
**F-92400 Courbevoie (FR)**

(72) Inventeur : **GAUTHIER, Michel**
**237, rue Saint-Ignace**
**La Prairie, Québec J5R 1V0 (CA)**
Inventeur : **RICOUX, Philippe**
**35, bd de l'Europe**
**F-69600 Oullins (FR)**
Inventeur : **MULLER, Daniel**
**12, rue Frédéric-Mistral**
**F-64000 Pau (FR)**

(74) Mandataire : **Boillot, Marc**
**SOCIETE NATIONALE ELF AQUITAINE**
**Division Propriété Industrielle**
**Tour Elf**
**F-92078 Paris la Défense Cédex 45 (FR)**

## Description

L'invention a trait à un procédé de chauffage rapide et uniforme d'un système optique multicouche transparent ou/et réfléchissant renfermant un électrolyte solide polymère, ledit système étant en particulier un système électrochrome.

Un système électrochrome à électrolyte solide polymère comprend généralement deux électrodes entre lesquelles est disposée en sandwich une couche mince d'un matériau macromoléculaire à conduction ionique (électrolyte solide polymère), notamment conducteur de protons ou d'ions de métal alcalin, l'une au moins desdites électrodes renfermant un matériau, dit matériau électrochrome, qui est placé en regard de la couche de matériau macromoléculaire à conduction ionique et dans lequel l'insertion ou la désinsertion d'ions, notamment protons ou ions de métal alcalin, se traduit par une variation du spectre d'absorption ou/et de réflexion lumineuse dudit matériau, ces électrodes, à base d'un dépôt conducteur de courant, étant chacune en contact direct, d'une part, avec la couche d'électrolyte solide polymère à laquelle elles adhèrent fortement et, d'autre part, avec l'une des faces en regard de deux plaques supports situées de part et d'autre desdites électrodes et dont l'une au moins et l'électrode associée sont transparentes. En particulier, chaque électrode est à base d'un dépôt conducteur de courant transparent, par exemple dépôt à base d'oxyde mixte d'indium et d'étain,et se trouve au contact de l'une des faces en regard de deux plaques en un matériau transparent organique ou minéral tel que verre ou matière plastique transparente, qui sont situées de part et d'autres desdites électrodes et sont associées pour constituer une structure de type vitrage.

Lorsque l'on établit, entre les électrodes, une différence de potentiel appropriée, généralement inférieure à 5 volts, on observe l'apparition d'une coloration permanente du système électrochrome, lequel système peut devenir à nouveau incolore par application d'une tension électrique, généralement de signe opposé à celle ayant provoqué la coloration.

Un système électrochrome du type précité peut être utilisé en tant que vitrage à transmission variable de la lumière à usage domestique ou pour véhicules automobiles ou encore comme rétroviseur ou miroir à réflexion variable de la lumière.

Il est intéressant de pouvoir chauffer uniformément une telle surface vitrée pour permettre le désembuage, le dégivrage et/ou une réponse plus rapide du changement de coloration à la tension électrique appliquée.

L'utilisation d'une source extérieure de chauffage pour réaliser le chauffage d'un système électrochrome du type précité ne permet pas d'arriver au résultat recherché, car une telle manière d'opérer entraîne l'apparition d'un gradient thermique à l'intérieur du système électrochrome en raison de la mauvaise diffusion de la chaleur dans la structure multicouche formant ledit système, ce qui se traduit par un fonctionnement non homogène de ce système.

On a déjà proposé, comme décrit dans la citation GB-A-2 065 027, d'effectuer le chauffage d'une composition polymère se présentant en couche mince et renfermant un matériau macromoléculaire à conduction ionique consistant en un polyéther associé à un sel ionisable, en faisant appel à une technique de chauffage par pertes diélectriques, qui consiste à soumettre ladite composition à l'action d'ondes électromagnétiques de très hautes fréquences, à savoir de fréquences de l'ordre de $10^6$ à $10^8$ hertz.

Une telle technique de chauffage par pertes diélectriques n'est pas adaptée au chauffage d'un système électrochrome tel que mentionné plus haut, qui comporte une couche mince d'un matériau macromoléculaire à conduction ionique intercalée en sandwich entre deux structures à conduction électronique élevée, à savoir les électrodes dudit système, car outre les difficultés liées à sa mise en oeuvre et les inconvénients qu'elle entraîne pour l'environnement par l'emploi de signaux électriques de très haute fréquence, cette technique se prête mal au chauffage de structures multicouches comportant plusieurs couches à conduction électronique élevée proches les unes des autres.

La citation GB-A-2164466 concerne un système électrochrome multicouche à électrolyte solide polymère, dont l'effet électrochrome ne se développe qu'à des températures de l'ordre de 150°C, ledit système électrochrome, qui peut prendre la forme d'une carte de crédit, comportant une couche d'un électrolyte solide polymère confinée entre deux électrodes portant chacune une couche d'un matériau électrochrome placée en regard de l'électrolyte solide polymère. Pour inscrire ou effacer des informations sur des zones déterminées de la carte électrochrome, on applique une tension continue entre ses électrodes (tension de fonctionnement du système électrochrome) tout en soumettant lesdites zones à un chauffage local à l'aide d'éléments chauffants, par exemple résistances électriques, sélectionnables extérieures à la carte et venant au contact de cette dernière, la chaleur produite dans les éléments chauffants, par exemple par effet Joule, étant transférée à la carte électrochrome par conduction thermique.

On a maintenant trouvé un procédé de chauffage rapide et uniforme d'un système électrochrome comportant au moins une couche mince d'un matériau macromoléculaire à conduction ionique intercalée entre deux électrodes, constituant deux structures à conduction électronique élevée, de manière à être en contact intime avec lesdites électrodes, qui permet de remédier aux inconvénients des méthodes de chauffage par source extérieure de chauffage ou par pertes diélectriques. Un tel procédé est plus généralement utilisable pour le chauffage de tout système optique multicouche transparent ou/et réfléchissant, qui comprend deux électrodes entre lesquelles est disposée en sandwich une couche d'un matériau macromoléculaire à conduction ionique (électrolyte solide polymère), notamment conducteur de protons ou d'ions de métal alcalin, et transparent aux épaisseurs utilisées, ces électrodes, à base d'un dépôt conducteur de courant, étant chacune en contact direct, d'une part, avec la couche d'électrolyte solide polymère à laquelle elles adhèrent fortement et, d'autre part, avec l'une des faces en regard de deux plaques supports situées de part et d'autre desdites électrodes et dont l'une au moins et l'électrode associée sont transparentes, ledit système optique étant en particulier tel que chaque électrode consiste en un dépôt transparent conducteur de courant, par exemple dépôt à base d'oxydes mixte d'indium et d'étain, disposé au contact de l'une des faces en regard de deux plaques en un matériau transparent organique ou minéral tel que verre ou matière plastique transparente, qui sont situées de part et d'autre desdites électrodes et sont associées pour constituer une structure de type vitrage.

Le procédé selon l'invention se caractérise en ce que l'on applique entre les électrodes du système optique, situées de part et d'autre de la couche de matériau macromoléculaire à conduction ionique, un signal de tension électrique dont au moins une partie comporte une composante alternative, qui possède une fréquence inférieure à 5 kHz et une amplitude, c'est-à-dire une différence entre ses valeurs maximale et moyenne, comprise entre 0,05 et 100 volts, de manière à générer dans le système optique un courant ionique alternatif susceptible de produire un échauffement du matériau macromoléculaire à conduction ionique par effet Joule.

Avantageusement, la fréquence de la composante alternative du signal de tension électrique appliqué entre les électrodes du système optique est plus particulièrement comprise entre 2 et 2000 Hz et se situe de préférence entre 10 et 500 Hz. En outre, les valeurs préférées de l'amplitude de ladite composante alternative sont comprises entre 0,05 et 30 volts.

La composante alternative du signal de tension électrique utilisé selon l'invention peut être sinusoidale ou non sinusoidale et être ininterrompue ou discontinue.

Cette composante alternative peut consister notamment en une tension électrique sinusoidale de fréquence égale à 50 ou 60 Hz générée à partir de la tension alternative sinusoidale fournie par les réseaux de distribution électrique.

L'homme de l'art saura aisément ajuster la puissance électrique à fournir aux bornes du système optique, notamment système électrochrome, du type précité à électrolyte solide polymère, que l'on désire chauffer, pour atteindre la température voulue en un temps déterminé en tenant compte de la taille et de la géométrie dudit système à chauffer, de sa capacité calorifique et de sa déperdition de chaleur vers le milieu extérieur.

En effet, la puissance thermique dissipée dans l'électrolyte solide polymère, du fait du mouvement alternatif des ions qu'il renferme, est de la forme $U_A^2/Ri$, $U_A$ étant la valeur efficace de la composante alternative du signal de tension électrique appliqué et Ri représentant la résistance ionique de la couche d'électrolyte solide polymère du système optique à chauffer. Cette même résistance ionique est donnée par la relation $Ri = K \cdot \dfrac{e}{S}$, dans laquelle K est la résistivité spécifique ionique de l'électrolyte solide polymère et e et S désignent respectivement l'épaisseur et la surface de la couche d'électrolyte solide polymère du système optique. La puissance thermique dissipée dans l'électrolyte solide polymère est donc de la forme $U_A^2/Ri$ ou $U_A^2 \cdot \dfrac{S}{K \cdot e}$, $U_A$ étant la tension.

La tension alternative à appliquer au système optique pour le chauffer avec une puissance thermique donnée est donc d'autant plus faible que ce système est de plus grande surface et de faible épaisseur. De même le chauffage d'un ensemble de n systèmes optiques identiques nécessite l'application d'une tension alternative qui est plus élevée (associée à une intensité moins élevée) lorsque ces n systèmes sont connectés en série que lorsque ces n systèmes sont connectés selon un montage en parallèle.

Au cours du chauffage du système optique, l'intensité du courant alternatif, qui est généré au sein du matériau macromoléculaire à conduction ionique du fait de l'application du signal de tension électrique à composante alternative entre les électrodes dudit système, a tendance à croître avec la température en raison de la diminution de la résistance du matériau à conduction ionique. Si besoin est, la température au sein dudit matériau à conduction ionique peut être contrôlée au cours du chauffage du système optique pour ne pas dépasser une valeur prédéterminée, ledit contrôle pouvant être réalisé notamment soit en utilisant un signal de tension électrique dont la composante alternative a une valeur efficace constante et en limitant l'intensité du courant alternatif généré ou/et en maintenant constante l'intensité du courant alternatif passant dans le matériau à conduction ionique et en limitant l'amplitude de la composante alternative du signal de tension électrique. Ces techniques de régulation thermique de la température d'un conducteur sont bien connues dans l'art et ne seront donc pas décrites en détail.

Comme indiqué plus haut, le système optique que l'on chauffe par le procédé selon l'invention comporte une couche mince d'un matériau macromoléculaire à conduction ionique (électrolyte solide polymère) intercalée en sandwich entre deux électrodes.

Par "couche mince" du matériau macromoléculaire à conduction ionique, on entend une couche dudit matériau dont l'épaisseur, qui correspond en fait à la distance séparant les deux électrodes situées de part et d'autre du matériau macromoléculaire à conduction ionique, est faible par rapport aux surfaces de contact de ce matériau macromoléculaire avec les couches adjacentes formées des électrodes. Avantageusement, l'épaisseur de la couche mince du matériau macromoléculaire à conduction ionique est comprise entre 5μm et 2000μm, ladite épaisseur devant être aussi régulière que possible.

Le matériau macromoléculaire à conduction ionique peut être l'un quelconque des matériaux à base de polymère susceptibles de présenter simultanément une conductivité ionique au moins égale à $10^{-7}$ siemens/cm à température ambiante et une conductivité électronique inférieure à $10^{-10}$ siemens/cm.

Le matériau macromoléculaire à conduction ionique peut en particulier consister en une solution solide d'au moins un sel ionisable, notamment sel de métal alcalin et en particulier sel de lithium, dans un matériau polymère plastique formé au moins en partie d'un ou plusieurs polymères et/ou copolymères de monomères comportant au moins un hétéroatome, notamment oxygène ou azote, apte à former des liaisons du type donneur/accepteur avec le cation du sel ionisable, le ou lesdits polymères étant en particulier choisis parmi les polyéthers et notamment parmi les homopolymères d'oxyde d'éthylène ou d'oxyde de propylène (cf. EP-A-0013199). Dans des perfectionnements apportés aux solutions solides du type précité, le matériau polymère plastique peut consister en particulier en un copolymère d'oxyde d'éthylène et d'au moins un autre oxyde cyclique, ledit copolymère ayant soit la structure d'un copolymère statistique (US-A-4578326) pouvant être éventuellement réticulé (FR-A-2570224) ou bien la forme d'un réseau du type uréthanne résultant de la réaction d'un copolymère séquencé d'oxyde d'éthylène et d'au moins un autre oxyde cyclique avec un agent couplant consistant en un polyisocyanate organique (FR-A-2485274). En outre, les sels ionisables mentionnés dans la citation EP-A-0013199 peuvent être remplacés en partie ou en totalité par des sels ionisables tels que closoboranes de métaux alcalins (FR-A-2523770), tétrakistrialkylsiloxyalanates de métaux alcalins (FR-A-2527611), bis(perhalogénoalkylsulfonyl) imidures ou bis(perhalogénoacyl) imidures de métaux alcalins (FR-A-2527602), tétraalkynylborates ou aluminates de métaux alcalins (FR-A-2527610), dérivés de métal alcalin des composés perhalogénoalkylsulfonylméthane ou perhalogénoacylméthane (FR-A-2606218) ou encore sels de métaux alcalins d'anions polyéthoxylés (EP-A-0213985).

Le matériau macromoléculaire à conduction ionique peut encore consister en une solution solide d'un sel ionisable, par exemple un sel tel que décrit dans les citations précitées, dans un matériau polymère constitué d'un polymère organométallique dans lequel au moins deux chaînes polyéthers sont reliées par un atome métallique choisi parmi Al, Zn et Mg (FR-A-2557735) ou parmi Si, Cd, B et Ti (FR-A-2565413) ou bien encore dans un matériau polymère formé d'un polyphosphazène portant sur chaque atome de phosphore deux groupements polyéthers tels que des groupements polyoxyéthylènes.

Le matériau macromoléculaire à conduction ionique peut être également choisi parmi les mélanges de polymères à caractère polaire et/ou solvatant avec tout sel, acide ou base suffisamment dissocié dans le polymère pour obtenir la conductivité ionique appropriée ou bien parmi les polymères porteurs de fonctions ionisables conduisant à des anions ou des cations fixés sur les chaînes macromoléculaires ou encore parmi les conducteurs protoniques tels que ceux décrits dans la citation FR-A-2593328 ou les mélanges de polymères inertes avec des matériaux à conduction ionique minéraux ou organiques dispersés dans la matrice polymère.

Si besoin est le matériau polymère à conduction ionique peut renfermer également un ou plusieurs additifs à caractère plastifiant, notamment une ou plusieurs sulfones ou sulfonamides telles que tétraéthylsulfonamide.

Lorsque le système optique à chauffer est un système électrochrome, au moins l'une des électrodes dudit système renferme un matériau, dit matériau électrochrome, qui est disposé en contact avec la couche d'électrolyte solide polymère et dans lequel l'insertion ou la désinsertion d'ions, notamment ions de métal alcalin, en particulier lithium, ou protons se traduit par une variation du spectre d'absorption ou/et de réflexion lumineuse dudit matériau. Un tel matériau électrochrome peut être notamment à base d'un oxyde d'un métal de transition ou d'un mélange ou d'une solution solide d'oxydes de métaux de transition et en particulier à base d'un oxyde d'un métal tel que tungstène, molybdène, vanadium ou d'un mélange ou d'une solution solide d'oxydes de tels métaux.

Quant au dépôt conducteur transparent, qui forme au moins l'une des électrodes du système optique et qui est en contact avec la face interne de la plaque support correspondante de matériau transparent organique ou minéral, il est généralement à base d'oxyde d'étain et consiste par exemple en oxyde mixte d'étain et d'indium ou d'étain et de cadmium ou encore en oxyde d'étain dopé par l'oxyde d'antimoine ou par le fluor.

Lorsque le système optique à chauffer renferme une électrode à base d'un dépôt conducteur transparent et une électrode à base d'un conducteur non transparent, ce dernier peut être notamment en un matériau conducteur de courant susceptible de former une couche réfléchissante et, par exemple, en un métal tel que Ag, Al, Ni, Li, Cr, acier inoxydable. Lorsque l'une des électrodes est à base d'un conducteur de courant non transparent, ce conducteur peut se présenter sous la forme d'un dépôt sur la plaque support associée ou peut encore consister en ladite plaque support que l'on choisit alors pour être conductrice. Le dépôt conducteur peut être produit sur la face appropriée de la plaque support par toute méthode convenant à cet effet et notamment par dépôt chimique ou physique sous vide.

Le procédé de chauffage selon l'invention se prête très bien au chauffage d'un système optique, notamment électrochrome, à électrolyte solide polymère du type précité puisqu'il permet un chauffage rapide et uniforme sans altérer aucunement la transparence des surfaces à désembuer ou dégivrer, ce qui est particulièrement utile pour le dégivrage des vitrages et/ou des rétroviseurs en période hivernale sur les véhicules automobiles. Ceci n'est évidemment pas le cas des filets résistifs chauffants imprimés à intervalles réguliers sur la face interne des vitres arrières d'automobiles qu'utilisent actuellement la plupart des constructeurs et qui ne sauraient être employés pour le dégivrage des pare-brises par suite de l'entrave à la visibilité qu'entraîne la présence de ces filets résistifs.

Lorsque le système optique à chauffer est un système électrochrome, la composante alternative de tension électrique que l'on applique entre les électrodes dudit dispositif électrochrome, pour réaliser le chauffage de ce dispositif, peut être couplée ou non à la tension électrique commandant la coloration du dispositif électrochrome.

Au cours du chauffage du dispositif optique, l'intensité du courant alternatif, généré au sein de l'électrolyte solide polymère par application de la tension alternative entre les électrodes dudit dispositif, a tendance à croître en raison de la diminution de la résistance de l'électrolyte solide polymère. Si besoin est, la température au cours du chauffage peut être régulée pour ne pas dépasser une valeur prédéterminée, cette régulation pouvant être effectuée comme indiqué précédemment en agissant sur la tension efficace et/ou sur l'intensité du signal alternatif.

La tension alternative utilisable pour réaliser le chauffage du système optique peut être générée par toute source de tension alternative connue susceptible de délivrer une tension électrique alternative ayant la forme d'un signal ininterrompu ou d'un signal discontinu présentant les caractéristiques de fréquence et d'amplitude définies précédemment. Cette source de tension alternative est connectée aux électrodes du système optique à chauffer. Lorsque le système optique est du type système électrochrome, la source de tension alternative peut être intégrée au système contrôlant la tension de commande dudit système électrochrome.

L'invention est illustrée par les exemples suivants donnés à titre non limitatif.

EXEMPLE 1 :

On réalisait un dispositif électrochrome comportant deux vitres ayant chacune une épaisseur de 3 mm et dont les faces en regard servaient chacune de support à une électrode, lesdites électrodes consistant l'une en un dépôt transparent d'ITO (oxydes d'indium et d'étain) et l'autre en un dépôt transparent d'ITO recouvert d'une couche de WO3 et étant séparées par une couche de 30µm d'épaisseur d'un électrolyte solide polymère à laquelle elles adhéraient fortement, la couche de WO3 susceptible d'insérer du lithium de manière réversible sous l'action d'un champ électrique étant en regard de l'électrolyte solide polymère. Ledit électrolyte consistait en une solution solide à 7 % en poids de $LiClO_4$ dans un copolymère d'oxyde d'éthylène et d'oxyde de butylène renfermant 70 % en poids d'oxyde d'éthylène, cet électrolyte étant transparent à la lumière visible et possédant une conductivité ionique, exprimée en siemens/cm, allant de $10^{-6}$ à 0°C à $10^{-4}$ à 80°C.

En appliquant une tension continue de 3 volts entre les électrodes du dispositif électrochrome ainsi réalisé, ce dispositif changeait de coloration à 20°C après une durée d'environ 300 secondes.

On répétait cet essai en superposant à la tension continue de 3 volts, utilisée pour commander le changement de coloration du dispositif, une tension électrique alternative ayant une amplitude de 5 volts et une fréquence de 50 Hz. On observait une élévation très rapide de la température du dispositif électrochrome, dont le coeur atteignait une température d'environ 60°C après environ 10 secondes et le changement de coloration dudit dispositif se produisait au bout d'environ 60 secondes. La cinétique du phénomène de chauffage résultant de l'application de la tension alternative est sensiblement la même pour une tension alternative donnée quelle que soit la surface du dispositif, seule l'intensité distribuée et donc la puissance dissipée par effet Joule varie proportionnellement à ladite surface.

EXEMPLE 2 :

On réalisait un dispositif "triplex" constitué de deux vitres, ayant chacune une épaisseur de 3mm, collées entre elles par un adhésif transparent. Les faces en regard des deux vitres étaient revêtues, chacune, d'un dépôt transparent conducteur à base d'oxyde mixte d'indium et d'étain (ITO), lesdits dépôts constituant les électrodes du dispositif. L'adhésif, liant entre elles les deux vitres, était constitué d'un électrolyte solide polymère consistant en une solution solide à 7% en poids de $LiClO_4$ dans une matrice po-

lymère de type polyétheruréthanne obtenue par action d'un triisocyanate aliphatique sur un copolymère statistique α,ω-dihydroxylé dérivant d'oxyde d'éthylène et d'oxyde de butylène.

Le dispositif ainsi réalisé formait un vitrage dont la surface était de 25cm² et l'épaisseur de l'adhésif électrolyte était égale à 50μm.

En applicant entre les électrodes dudit dispositif une tension alternative sinusoidale ayant une valeur efficace de 10 volts et une fréquence de 50 Hz, on observait après quelques secondes un accroissement de 20°C de la température de ce dispositif.

## Revendications

1. Procédé de chauffage rapide et uniforme d'un système optique multicouche transparent ou/et réfléchissant, ledit système comprenant deux électrodes entre lesquelles est disposée en sandwich une couche mince d'un matériau macromoléculaire à conduction ionique, transparent aux épaisseurs utilisées, ces électrodes, à base d'un dépôt conducteur de courant, étant chacune en contact, d'une part, avec la couche du matériau macromoléculaire à conduction ionique à laquelle elles adhèrent fortement et, d'autre part, avec l'une des faces en regard de deux plaques supports situées de part et d'autre desdites électrodes et dont l'une au moins et l'électrode associée sont transparentes, ce procédé se caractérisant en ce que l'on applique entre les électrodes du système optique un signal de tension électrique dont au moins une partie comporte une composante alternative, qui possède une fréquence inférieure à 5 kHz et une amplitude, c'est-à-dire une différence entre ses valeurs maximale et moyenne, comprise entre 0,05 et 100 volts, de manière à générer dans le système optique un courant ionique alternatif apte à produire un échauffement du matériau macromoléculaire à conduction ionique par effet Joule.

2. Procédé selon la revendication 1, caractérisé en ce que la fréquence de la composante alternative du signal de tension électrique appliqué entre les électrodes du système optique est comprise entre 2 et 2000 Hz et se situe de préférence entre 10 et 500 Hz.

3. Procédé selon la revendication 1 ou 2, caractérisé en ce que l'amplitude de la composante alternative du signal de tension électrique appliqué entre les électrodes du système optique est comprise entre 0,05 et 30 volts.

4. Procédé selon l'une des revendications 1 à 3, caractérisé en ce que la composante alternative de tension est un signal ininterrompu et notamment un signal sinusoidal ou encore un signal discontinu.

5. Procédé selon l'une des revendications 1 à 4, caractérisé en ce que l'on contrôle la température au sein du matériau macromoléculaire à conduction ionique pour ne pas dépasser une température prédéterminée, ledit contrôle étant réalisé soit en utilisant un signal de tension électrique dont la composante alternative a une valeur efficace constante et en limitant l'intensité du courant alternatif généré ou/et en maintenant constante l'intensité du courant alternatif passant dans le matériau à conduction ionique et en limitant l'amplitude de la composante alternative du signal de tension électrique.

6. Procédé selon l'une des revendications 1 à 5, caractérisé en ce que la couche mince du matériau macromoléculaire à conduction ionique du système optique a une épaisseur comprise entre 5μm et 2000μm.

7. Procédé selon l'une des revendications 1 à 6, caractérisé en ce que le matériau macromoléculaire à conduction ionique présente simultanément une conductivité spécifique ionique au moins égale à $10^{-7}$ siemens/cm à température ambiante et une conductivité spécifique électronique inférieure à $10^{-10}$ siemens/cm.

8. Procédé selon la revendication 7, caractérisé en ce que le matériau macromoléculaire à conduction ionique consiste en une solution solide d'au moins un sel ionisable, notamment sel de métal alcalin et en particulier sel de lithium, dans un matériau polymère plastique formé au moins en partie d'un ou plusieurs polymères et/ou copolymères de monomères comportant au moins un hétéroatome, notamment oxygène ou azote, apte à former des liaisons du type donneur/accepteur avec le cation du sel ionisable, le ou lesdits polymères ou copolymères étant en particulier des polyéthers et notamment des homopolymères d'oxyde d'éthylène ou d'oxyde de propylène ou des copolymères d'oxyde d'éthylène et d'au moins un autre éther cyclique.

9. Procédé selon la revendication 7, caractérisé en ce que le matériau macromoléculaire à conduction ionique consiste en une solution solide d'un sel ionisable dans un matériau polymère choisi parmi les polymères organométalliques dans lesquels au moins deux chaînes polyéthers sont reliées par un atome métallique choisi parmi Al, Zn, Mg, Si, Cd, B et Ti ou parmi les polyphosphazènes portant sur chaque atome de phosphore deux groupements polyéthers et notamment deux groupements polyoxyéthylènes.

10. Procédé selon la revendication 7, caractérisé en ce que le matériau macromoléculaire à conduction ionique est choisi parmi les mélanges de polymères à caractère polaire ou/et solvatant avec tout sel, acide ou base suffisamment dissocié dans le polymère pour obtenir la conductivité ionique désirée, les polymères porteurs de fonctions ionisables conduisant à des anions ou des cations fixés sur les chaînes macromoléculaires, les conducteurs protoniques polymères et les mélanges de polymères inertes avec des matériaux à conduction ionique minéraux ou organiques dispersés dans la matrice polymère.

11. Procédé selon l'une des revendications 1 à 10, caractérisé en ce que le dépôt transparent conducteur de courant constituant au moins l'une des électrodes du système optique est à base d'oxyde d'étain et, plus particulièrement, consiste en oxyde mixte d'étain et d'indium ou d'étain et de cadmium ou encore en oxyde d'étain dopé par l'oxyde d'antimoine ou par le fluor.

12. Procédé selon l'une des revendications 1 à 11, caractérisé en ce que le système optique à chauffer est tel que chacune de ses électrodes est formée d'un dépôt transparent conducteur de courant et que la plaque de support associée à chaque électrode est en un matériau transparent organique ou minéral, ledit système optique formant une structure de type vitrage.

13. Procédé selon l'une des revendications 1 à 11, caractérisé en ce que le système optique à chauffer est tel que l'une des ses électrodes est formée d'un dépôt transparent conducteur de courant, la plaque support associé étant en un matériau transparent organique ou minéral, tandis que l'autre électrode est constituée d'un conducteur en un matériau conducteur de courant et susceptible de former une surface réfléchissante, ledit matériau étant notamment un métal tel que Ag, Al, Ni, Li, Cr et acier inoxydable.

14. Procédé selon l'une des revendications 1 à 10, caractérisé en ce que sur l'une au moins des électrodes du système optique est disposé un matériau, dit matériau électrochrome, qui est placé en regard de la couche de matériau macromoléculaire à conduction ionique et dans lequel l'insertion ou la désinsertion d'ions, notamment ions de métal alcalin ou protons, se traduit par une variation du spectre d'absorption ou/et de réflexion lumineuse dudit matériau électrochrome, ledit système optique constituant un système électrochrome.

15. Procédé selon la revendication 14, caractérisé en ce que le matériau dont le spectre d'absorption ou/et de réflexion lumineuse varie par insertion ou désinsertion d'ions, notamment ions de métal alcalin ou protons, est à base d'un oxyde de métal de transition ou encore d'un mélange ou d'une solution solide d'oxydes de métaux de transition.

16. Procédé selon la revendication 14 ou 15, caractérisé en ce que l'on applique entre les électrodes du système électrochrome une tension électrique, qui est la résultante de la composante alternative de tension de chauffage et d'une tension ayant une valeur égale à la tension de commande du dispositif électrochrome.

17. Procédé selon la revendication 16, caractérisé en ce que lesdites tensions sont appliquées soit simultanément et séparément soit sous la forme d'une tension unique résultant de la superposition desdites tensions.

18. Procédé selon l'une des revendications 14 à 17, caractérisé en ce que le système électrochrome à chauffer est tel que le dépôt conducteur de courant, constituant chacune de ses électrodes, est transparent et que la plaque support associée à chaque électrode est en un matériau transparent organique ou minéral, ledit système électrochrome formant une structure de type vitrage.

19. Procédé selon l'une des revendications 14 à 17, caractérisé en ce que le système électrochrome à chauffer est tel que le dépôt conducteur constituant l'une de ses électrodes est transparent, la plaque support associée étant en un matériau transparent organique ou minéral, tandis que le conducteur de courant formant l'autre électrode est en un matériau conducteur de courant susceptible de former une surface réfléchissante, ledit matériau étant notamment un métal tel que Ag, Al, Ni, Li, Cr et acier inoxydable.

**Patentansprüche**

1. Verfahren zum schnellen und gleichmäßigen Beheizen eines transparenten und/oder reflektierenden optischen Vielschichtsystems, wobei das System zwei Elektroden aufweist, zwischen denen in Sandwich-Struktur eine dünne Schicht eines ionenleitenden makro-molekularen Materials angeordnet ist, das bei den verwendeten Schichtdicken transparent ist, wobei diese Elektroden auf der Basis einer elektrisch leitenden Ablagerung jede in Kontakt stehen einerseits mit der ionenleitenden Makro-Molekular-Material-Schicht , an der sie stark haften, und andererseits mit einer der gegenüberstehenden Oberfläche von zwei auf beiden Seiten der Elektroden angeordneten Trägerplatten , von denen mindestens eine zusammen mit ihrer entsprechenden Electrode transparent ist , dadurch **gekennzeichnet**, daß zwischen den beiden Elektroden des optischen Systems ein elektrisches Spannungssignal angelegt wird, von dem mindestens ein Teil eine Wechselstrom-Komponente aufweist mit einer Frequenz, die unter 5 kHz beträgt, und einer Amplitude, d.h. einer Differenz zwischen dem Maximalwert und dem Mittelwert, die zwischen 0,05 und 100 Volt beträgt, so daß im optischen System ein Ionenwechselstrom entsteht, der geeignet ist, das ionenleitende makromolekulare Material durch den Joule-Effekt zu erwärmen.

2. Verfahren nach Anspruch 1, dadurch gekennzeichnet, daß die Frequenz der Wechselstrom-Komponente des zwischen die beiden Elektroden des optischen Systems angelegten elektrischen Spannungssignals zwischen 2 und 2000 Hz und vorzugsweise zwischen 10 und 500 Hz beträgt.

3. Verfahren nach Anspruch 1 oder 2, dadurch gekennzeichnet, daß die Amplitude der Wechselstrom-Komponente des zwischen die beiden Elektroden des optischen Systems angelegten elektrischen Spannungssignals zwischen 0,05 und 30 Volt beträgt.

4. Verfahren nach einem der Ansprüche 1 bis 3, dadurch gekennzeichnet, daß die Wechsel-Spannungs-Komponente ein ununterbrochenes Signal ist, insbesondere ein Sinussignal, oder auch ein diskontinuierliches Signal.

5. Verfahren nach einem der Ansprüche 1 bis 4, dadurch gekennzeichnet, daß die Temperatur im Innern des ionenleitenden makro-molekularen Materials kontrolliert wird, so daß eine vorbestimmte Temperatur nicht überschritten wird, wobei diese Kontrolle entweder dadurch verwirklicht wird, daß ein elektrisches Spannungssignal verwendet wird, dessen Wechselstrom-Komponente einen konstanten effektiven Wert hat und indem die Stärke des erzeugten Wechselstroms gesteuert wird und/oder indem die Stärke des durch das ionenleitende Material fließenden Wechselstroms konstant gehalten wird und indem die Amplitude der Wechselstrom-Komponente des elektrischen Spannungssignals begrenzt wird.

6. Verfahren nach einem der Ansprüche 1 bis 5, dadurch gekennzeichnet, daß die dünne ionenleitende Makro-MolekularMaterial-Schicht des optischen Systems eine Dicke zwischen 5μm und 2000 μm aufweist.

7. Verfahren nach einem der Ansprüche 1 bis 6, dadurch gekennzeichnet, daß das ionenleitende Makro-Molekular-Material gleichzeitig eine Ionen-Leitfähigkeit von $10^{-7}$ siemens/cm bei Zimmertemperatur aufweist und eine spezifische Leitfähigkeit, die niedriger ist als $10^{-10}$ siemens/cm.

8. Verfahren nach Anspruch 7, dadurch gekennzeichnet, daß das ionenleitende Makro-Molekular-Material aus einer festen Lösung wenigstens eines ionisierbaren Salzes besteht, insbesondere aus Alkali-Metall-Salz und ganz besonders Lithium-Salz, in einem Polymer-Kunststoff, der wenigstens teilweise aus einem oder mehreren Polymeren und/oder Copolymeren aus Monomeren, die wenigstens ein Heteroatom, insbesondere Sauerstoff oder Stickstoff, enthalten, das dazu geeignet ist, Verbindungen des Donator/Akzeptor-Typs mit dem Kation des ionisierbaren Salzes einzugehen, wobei das Polymer bzw. die Polymere bzw. Copolymere insbesondere Polyether sind, insbesondere Ethylenoxid- oder Propylenoxid-Homopolymere oder Copolymere von Ethylenoxid und wenigstens einem anderen zyklischen Ether .

9. Verfahren nach Anspruch 7, dadurch gekennzeichnet, daß das ionenleitende Makro-Molekular-Material aus einer festen Lösung eines ionisierbaren Salzes in einem Polymer-Material besteht, das aus den metallorganischen Polymeren ausgewählt wurde, bei denen mindestens zwei Polyether-Ketten durch ein Metallatom der Elemente Al, Zn, Mg, Si, Cd, B und Ti oder aus den Polyphosphazenen gebildet sind, die auf jedem Phosphoratom zwei Polyether-Gruppierungen tragen, insbesondere zwei Polyoxyethylen-Gruppierungen.

10. Verfahren nach Anspruch 7, dadurch gekennzeichnet, daß das ionenleitende Makro-Molekular-Material ausgewählt ist aus den Gemischen von polaren Polymeren und/oder solvatisierenden Polymeren mit jedem Salz oder jeder Säure oder Base , das oder die im Polymer genügend dissoziert ist ,um die gewünschte Ionen-Leitfahigkeit zu erreichen , aus den Polymeren deren makromolekularen Ketten zu Anionen oder Kationen führende ionisierbare Funktionen tragen , den polymeren Protonenleitern und den Gemischen aus inerten Polymeren und anorganischen und organischen Stoffen mit Ionenleitung , die in der Polymermatrix dispersiert sind .

11. Verfahren nach einem der Ansprüche 1 bis 10, dadurch gekennzeichnet, daß die elektrisch leitende transparente Ablagerung, die wenigstens eine der Elektroden des optischen Systems bildet, auf Zinnoxid basiert und insbesondere aus gemischtem Zinn- und Indium-Oxid besteht, aus Zinn- und Kadmium-Oxid oder aus Zinn-Oxid, das mit Antimon-Oxid oder Fluor dotiert ist.

12. Verfahren nach einem der Ansprüche 1 bis 11, dadurch gekennzeichnet, daß das beheizbare optische System so beschaffen ist, daß jede seiner Elektroden aus einer transparenten elektrisch leitenden Ablagerung gebildet wird und daß die zu jeder Elektrode gehörende Trägerplatte aus einem transparenten organischen oder anorganischen Material besteht, wobei das optische System eine Glaskonstruktion bildet.

13. Verfahren nach einem der Ansprüche 1 bis 11, dadurch gekennzeichnet, daß das beheizbare optische System so beschaffen ist, daß eine seiner Elektroden von einer transparenten elektrisch leitenden Ablagerung gebildet wird und daß die zu jeder Elektrode gehörende Trägerplatte aus einem transparenten organischen oder anorganischen Material besteht, während die andere Elektrode aus einem Leiter eines elektrisch leitenden Materials besteht, das eine reflektierende Oberfläche bildet, wobei das Material insbesondere ein Metall wie Ag, Al, Ni, Li, Cr und nichtrostender Stahl ist.

14. Verfahren nach einem der Ansprüche 1 bis 10, dadurch gekennzeichnet, daß auf mindestens einer der Elektroden des optischen Systems ein Material angeordnet ist, insbesondere ein elektrochromes Material, das in bezug auf die ionenleitenden Makro-Molekül-Material-Schicht angeordnet ist und in dem die Ioneninsertion bzw. -desinsertion, insbesondere von Metall-Alkalin-Ionen oder Protonen, sich in einer Veränderung des Absorptionsspektrums und/oder Lichtreflexionsspektrums des elektrochromen Materials auswirkt, wobei das optisches System ein elektrochromes System bildet.

15. Verfahren nach Anspruch 14, dadurch gekennzeichnet, daß das Material, dessen Licht-Absorptionsspektrum und/oder Reflexionsspektrum sich durch Ioneninsertion oder -desinsertion, insbesondere von Alkalin-Metall-Ionen oder Protonen, verändert, auf einem Übergangsmetalloxid basiert oder auf einer Mischung oder einer festen Oxidlösung von Übergangsmetallen.

16. Verfahren nach einem der Ansprüche 14 oder 15, dadurch gekennzeichnet, daß zwischen den Elektroden des elektrochromen Systems eine elektrische Spannung angelegt wird, die die Resultierende der Wechselstrom-Komponente der Heizspannung und einer Spannung ist, deren Wert dem der Steuerspannung der elektrochromen Vorrichtung entspricht.

17. Verfahren nach Anspruch 16, dadurch gekennzeichnet, daß die genannten Spannungen entweder gleichzeitig und getrennt angelegt werden oder in der Form einer Einheitsspannung, die aus der Superposition der genannten Spannungen resultiert.

18. Verfahren nach einem der Ansprüche 14 bis 17, dadurch gekennzeichnet, daß das beheizbare elektrochrome System so beschaffen ist, daß die elektrisch leitende Ablagerung, die die beiden Elektroden bildet, transparent ist und daß die jeder Elektrode zugeordnete Trägerplatte aus einem transparenten organischen oder anorganischen Material, wobei das elektrochrome System eine Glaskonstruktion bildet.

19. Verfahren nach einem der Ansprüche 14 bis 17, dadurch gekennzeichnet, daß das beheizbare elektrochrome System so beschaffen ist, daß die leitende Ablagerung, die eine der Elektroden bildet, transparent ist, wobei die entsprechende Trägerplatte aus einem transparenten organischen oder anorganischen Material besteht, während der die andere Elektrode bildende elektrische Leiter aus einem elektrischen Leitermaterial besteht, das eine reflektierende Oberfläche bildet, wobei das Material insbesondere ein Metall wie Ag, Al, Ni, Li, Cr und nichtrostender Stahl sein kann.

## Claims

1. Method for fast, regular heating of a transparent and/or reflective multi-layer optical system, the said system comprising two electrodes between which there is disposed in sandwich form a thin layer of an ionically conductive macromolecular substance which is transparent at the thicknesses used, these electrodes, which are based on a current-conducting deposit, each being in contact on the one hand with the layer of ionically conductive macromolecular substance to which they adhere strongly, and, on the other hand with one of the opposite surfaces of two support plates disposed on both sides of the said electrodes, and of which at least one and the associated electrode are transparent, this method being characterised in that between the electrodes of the optical system there is applied an electrical voltage signal, of which at least part comprises an alternating component, which has a frequency lower than 5 kHz, and an amplitude, i.e. a difference between its maximum and mean values, of between 0.05 and 100 volts, such as to generate in the optical system an alternating ionic current suitable for producing heating of the ionically conductive macromolecular substance, by Joule effect.

2. Method according to Claim 1, characterised in that the frequency of the alternating component of the electrical voltage signal applied between the electrodes of the optical system is between 2 and 2000 Hz, and is preferably between 10 and 500 Hz.

3. Method according to either of Claims 1 or 2, characterised in that the amplitude of the alternating component of the electrical voltage signal applied between the electrodes of the optical system is between 0.05 and 30 volts.

4. Method according to any one of Claims 1 to 3, characterised in that the alternating voltage component is an uninterrupted signal, and in particular a sinusoidal or intermittent signal.

5. Method according to any one of Claims 1 to 4, characterised in that the temperature inside the ionically conductive macromolecular substance is controlled in order to avoid exceeding a predetermined temperature, the said control being implemented either by using an electrical voltage signal, of which the alternating component has a constant effective value, and by limiting the intensity of the alternating current generated, and/or by maintaining constant the intensity of the alternating current which passes into the ionically conductive substance, and by limiting the amplitude of the alternating component of the electrical voltage signal.

6. Method according to any one of Claims 1 to 5, characterised in that the thin layer of ionically conductive macromolecular substance of the optical system has a thickness of between 5μm and 2000μm.

7. Method according to any one of Claims 1 to 6, characterised in that the ionically conductive macromolecular substance has simultaneously specific ionic conductivity of at least $10^{-7}$ siemens/cm at ambient temperature, and specific electronic conductivity lower than $10^{-10}$ siemens/cm.

8. Method according to Claim 7, characterised in that the ionically conductive macromolecular substance consists of a solid solution of at least an ionisable salt, in particular a salt of an alkaline metal, and specifically a lithium salt, in a plastics polymer substance consisting of at least partly of one or a plurality of polymers and/or copolymers of monomers, comprising at least one heteroatom, in particular oxygen or nitrogen, suitable for forming bonds of the donor/acceptor type with the cation of the ionisable salt, the polymer(s) or copolymer(s) being in particular polyethers and specifically homopolymers of ethylene oxide or propylene oxide, or copolymers of ethylene oxide and at least another ring ether.

9. Method according to Claim 7, characterised in that the ionically conductive macromolecular substance consists of a solid solution of an ionisable salt in a polymer substance selected from amongst the organometallic polymers, in which at least two polyether chains are bonded by a metallic atom selected from amongst Al, Zn, Mg, Si, Cd, B and Ti, or from amongst the polyphosphazenes carrying two polyether groups and in particular two polyoxyethylene groups on each phosphorus atom.

10. Method according to Claim 7, characterised in that the ionically conductive macromolecular substance is selected from amongst mixtures of polymers of a polar and/or solvating nature with any salt, acid or base which is sufficiently dissociated in the polymer, in order to obtain the required ionic conductivity, the polymers carrying ionisable functions conducting to anions or cations attached to the macromolecular chains, the protonic polymer conductors and the mixtures of inert polymers with mineral or organic ionically conductive substances dispersed in the polymer matrix.

11. Method according to any one of Claims 1 to 10, characterised in that the transparent current-conductive deposit which constitutes at least one of the electrodes of the optical system is based on tin oxide, and more specifically, consists of mixed tin and indium oxide or tin and cadmium oxide or of tin oxide doped by antimony oxide or by fluorine.

12. Method according to any one of Claims 1 to 11, characterised in that the optical system to be heated is such that each of its electrodes consists of a transparent current-conductive deposit, and the support plate associated with each electrode is made of a transparent organic or mineral substance, the said optical system forming a glazing-type structure.

13. Method according to any one of Claims 1 to 11, characterised in that the optical system to be heated is such that one of its electrodes consists of a transparent current-conductive deposit, the associated support plate being made of a transparent organic or mineral substance, whereas the other electrode consists of a conductor which is made of a current-conductive substance, and can form a reflective surface, the said substance being in particular a metal such as Ag, Al, Ni, Li, Cr and stainless steel.

14. Method according to any one of Claims 1 to 10, characterised in that on at least one of the electrodes of the optical system there is disposed a so-called electrochromic substance, which is positioned opposite the layer of ionically conductive macromolecular substance, and into or from which ions, and in particular ions of an alkaline metal or protons, can be inserted or removed to vary the spectrum of absorption and/or light reflection of the said electrochromic substance, the said optical system constituting an electrochromic system.

15. Method according to Claim 14, characterised in that the substance of which the spectrum of absorption and/or light reflection is varied, by insertion or removal of ions, in particular ions of an alkaline metal or protons, is based on a transition metal oxide or on a mixture, or on a solid solution of transition metal oxides.

16. Method according to either of Claims 14 or 15, characterised in that between the electrodes of the electrochromic system, there is applied an electrical voltage which is the result of the alternating heating voltage component and a voltage which has a value equal to the control voltage of the electrochromic device.

17. Method according to Claim 16, characterised in that the said voltages are applied either simultaneously and separately, or in the form of a single voltage obtained from superimposition of the said voltages.

18. Method according to any one of Claims 14 to 17, characterised in that the electrochromic system to be heated is such that the current-conductive deposit which constitutes each of its electrodes is transparent, and the support plate which is associated with each electrode is made of a transparent organic or mineral substance, the said electrochromic system forming a glazing-type structure.

19. Method according to any one of Claims 14 to 17, characterised in that the electrochromic system to be heated is such that the conductive deposit which constitutes one of its electrodes is transparent, the associated support plate being made of a transparent organic or mineral substance, whereas the current conductor which forms the other electrode is made of a current-conductive substance which can form a reflective surface, the said substance being in particular a metal such as Ag, Al, Ni, Li, Cr and stainless steel.